**Europäisches Patentamt**

**European Patent Office**

**Office européen des brevets**

(19)

(11) Numéro de publication : **0 278 813 B1**

# FASCICULE DE BREVET EUROPEEN

(12)

(45) Date de publication du fascicule du brevet :
**03.04.91 Bulletin 91/14**

(51) Int. Cl.$^5$ : **G01P 3/36**

(21) Numéro de dépôt : **88400108.2**

(22) Date de dépôt : **19.01.88**

(54) **Dispositif optique utilisant un filtre et un analyseur interférométriques adaptés.**

(30) Priorité : **21.01.87 FR 8700659**

(43) Date de publication de la demande :
**17.08.88 Bulletin 88/33**

(45) Mention de la délivrance du brevet :
**03.04.91 Bulletin 91/14**

(84) Etats contractants désignés :
**BE DE GB IT SE**

(56) Documents cités :
**APPLIED OPTICS, vol. 25, no. 9, 1 mai 1986,
pages 1429-1433, Optical Society of America,
New York, US; S. GIDON et al.:
"Instantaneous velocity field measurements:
application to shock wave studies"**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Gidon, Serge
Rue des Edelweiss
F-38500 Voiron (FR)**
Inventeur : **Behar, Gilles
170, Avenue du Général Leclerc
F-92330 Sceaux (FR)**

(74) Mandataire : **Mongrédien, André et al
c/o BREVATOME 25, rue de Ponthieu
F-75008 Paris (FR)**

EP 0 278 813 B1

## Description

La présente invention a pour objet un dispositif optique utilisant un filtre et un analyseur interférométriques adaptés. Elle trouve une application dans la mesure de la position, du déplacement ou de la vitesse d'une surface ou d'un objet. L'un des domaines d'application de l'invention est l'étude du comportement hydrodynamique des matériaux sous un effet de choc (détonique).

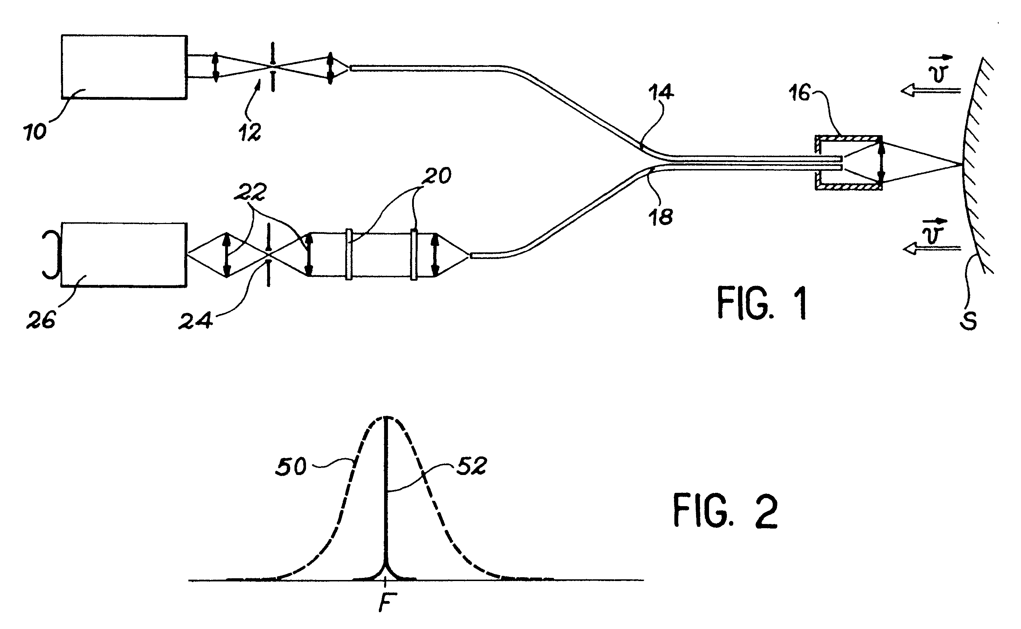

Le dispositif de l'invention est du genre vélocimètre DOPPLER. Un tel dispositif est connu et l'on peut en rappeler brièvement le principe à l'aide des figures 1 à 3.

Sur la figure 1, on voit un laser 10 monomode (dit encore monofréquence), du type à argon par exemple, émettant un faisceau lumineux traversant un obturateur ultra-rapide 12 et pénétrant dans une fibre optique 14. A l'autre extrémité de cette fibre se trouve une tête 16 placée près d'une surface S dont on veut mesurer la vitesse. La tête 16 maintient une autre fibre 18 qui reçoit la lumière réfléchie ou diffusée par la surface S et la guide vers un interféromètre Fabry-Pérot 20. A l'arrière de celui-ci, on trouve une optique 22, une fente 24 et une caméra électronique 26, du type à balayage de fente par exemple.

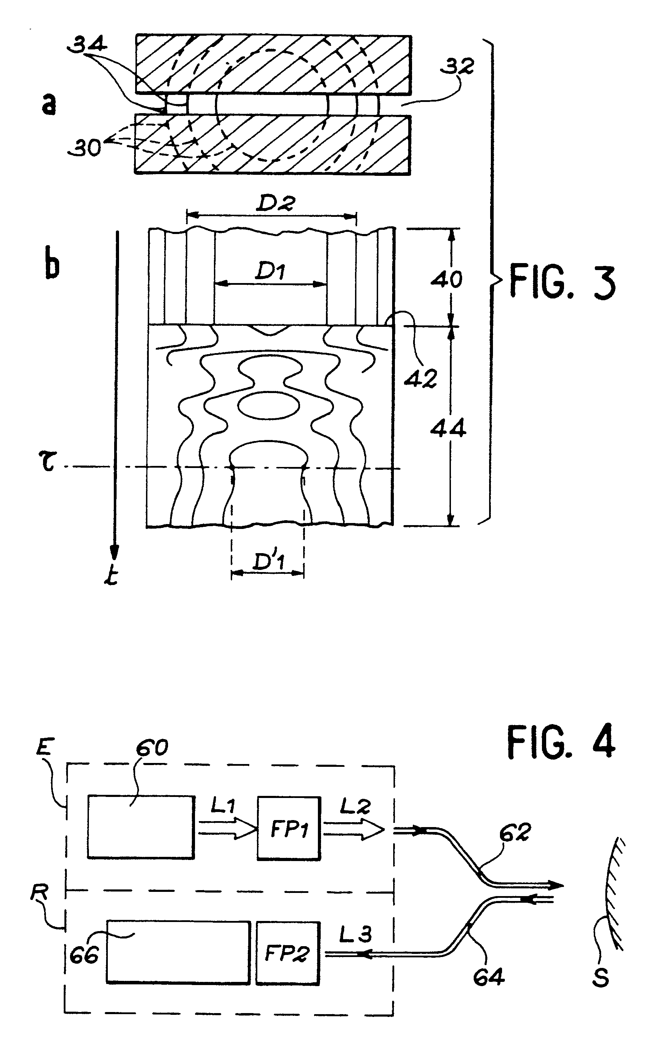

Les figures 2 et 3 permettent de décrire le fonctionnement de cette installation. Le laser 10 émet une lumière monochromatique caractérisée par une fréquence unique F (dont la valeur dépend du système sélecteur de mode utilisé). Si l'on représente schématiquement, comme sur la figure 2, la raie 50 utilisée dans le mécanisme d'émission stimulée (par exemple la raie à 5145 Å pour le laser à argon ionisé), le mode unique oscillant dans le laser est un mode tel que 52, dont la largeur est très faible (la figure n'est pas à l'échelle).

La suppression de tous les autres modes est obtenue en général par l'utilisation d'un étalon Fabry-Pérot introduit dans la cavité même du laser.

Cette fréquence unique du rayonnement incident est décalée par effet DOPPLER lors de la réflexion du faisceau lumineux sur la figure S. Le décalage en fréquence $\Delta F$ est lié à la vitesse V par la relation :

$$V = \frac{c}{2} \frac{\Delta F}{F}$$

où $c$ est la vitesse de la lumière devant la surface.

Lorsque le faisceau de retour, à la fréquence $F + \Delta F$, traverse l'interféromètre de Fabry-Pérot 20, il se produit un phénomène d'interférence multiple qui donne naissance, à l'arrière, à une série d'anneaux qui apparaissent sur la partie a de la figure 3 sous la référence 30. Si l'on observe ces anneaux à travers une fente 32, on obtient des segments circulaires 34 dont l'écartement dépend de la valeur de $\Delta F$.

Sur la partie b de la figure 3, on voit la trace correspondant à ces segments, évoluant en fonction du temps, qui est supposé s'écouler de haut en bas. Dans la partie 40, la cible est encore immobile et les traces sont rectilignes puisque les anneaux gardent leur diamètre. A l'instant 42, la cible est mise brusquement en mouvement et sa vitesse augmente. Après un brusque décrochement les traces dessinent des courbes, qui reflètent la valeur de la vitesse de la cible. De façon plus précise, la vitesse V est donnée par la formule :

$$V = \frac{\lambda c}{4e} \left[ n + \frac{D'^2_1 - D^2_1}{D^2_2 - D^2_1} \right]$$

où $\lambda$ est la longueur d'onde correspondant à la fréquence unique du laser, $c$ la vitesse de la lumière, $e$ la longueur du Fabry-Pérot, D1 et D2 les diamètres des premier et second anneaux, n le nombre de sauts d'anneaux.

Un tel dispositif est décrit par exemple dans l'article de S. GIDON, G. GARCIN et G. BEHAR intitulé "Doppler laser interferometry with light transmission by two optical fibers", et dans l'article de M. DURAND intitulé "Emploi de fibres optiques pour la mesure de vitesse par interférométrie Doppler-Laser avec interféromètre de Fabry-Pérot" tous deux publiés dans les Comptes rendus de la 16ème Conférence "High Speed Photography and Photonics" qui s'est tenue les 27-31 août 1984 à Strasbourg (France), SPIE, vol. 491, pages 894-898 pour le premier et pages 650 à 657 pour le second.

Bien que satisfaisants à certains égards, ces dispositifs présentent cependant des inconvénients. En effet,

2

la pureté du spectre de fréquence exigée pour la source lumineuse entraîne que la puissance lumineuse disponible est faible. On sait, en effet, que l'opération qui consiste à rendre un laser monofréquence entraîne de lourdes pertes en puissance, non seulement parce qu'elle sélectionne un mode parmi plusieurs mais aussi parce que le mode sélectionné se trouve atténué par les dispositifs optiques de sélection. C'est ainsi qu'avec des lasers à argon ionisé on travaille avec des puissances de l'ordre de quelques Watts. Si l'on veut augmenter cette puissance on doit avoir recours à des dispositifs amplificateurs par exemple du genre lasers à colorants. Mais de telles installations sont très complexes. Encore ne peut-on guère dépasser, avec de telles chaînes, une dizaine de Watts.

La présente invention a pour but de remédier à cet inconvénient. A cette fin, elle préconise un moyen qui permet, de manière très simple, d'obtenir un faisceau lumineux de travail de puissance élevée, par exemple d'au moins 100 Watts, ce qui représente environ 20 fois les puissances généralement utilisées dans l'art antérieur.

L'invention va à l'encontre des préjugés de l'art antérieur en ce sens qu'elle recommande l'abandon du principe d'utilisation d'un rayonnement monofréquence. Elle prévoit au contraire la formation d'un rayonnement multifréquence à l'aide d'une source lumineuse à spectre large (soit une source cohérente : laser à gaz, à colorant, solide, semiconducteur, etc..., soit une source incohérente : diode électroluminescente, lampe, arc, etc...), cette source étant associée extérieurement à un filtre de fréquence dont la caractéristique spectrale est formée d'un peigne de fréquences équidistantes. Le faisceau d'utilisation devient alors multifréquence et, pour cette raison, de forte puissance. Combinée à cette première disposition, l'invention en prévoit une seconde, qui consiste à utiliser un système d'analyse interférométrique qui présente le même spectre de fréquence que le filtre utilisé à l'émission.

Par analogie avec une technique utilisée en transmission électrique, on pourrait dire que, selon l'invention, on effectue un filtrage adapté.

Le mécanisme d'interférence qui se produit dans la voie de réception et qui permet de mesurer finalement le déplacement et/ou la vitesse de la surface, se produit pour toutes les fréquences en présence. Chaque anneau résultant d'une interférence constructive, qui était unique dans l'art antérieur du fait de l'unicité de la fréquence, devient multiple, en raison de la multiplicité de fréquences préconisée par l'invention. Mais, de manière surprenante, cette multiplicité n'entache en rien la précision de la mesure. La figure d'interférence formée derrière le dispositif interférométrique d'analyse est nette et permet la mesure de la vitesse d'autant plus facilement que l'intensité des anneaux est renforcée du fait de la plus grande puissance lumineuse.

La très grande latitude offerte par l'invention dans le choix de la source lumineuse permet d'utiliser des lasers fonctionnant en impulsions avec une très grande puissance. Naturellement, dans ce cas, l'impulsion lumineuse devra être synchronisée avec le phénomène à étudier, en particulier s'il s'agit de mesures en détonique.

De toute façon, l'invention sera mieux comprise à la lumière de la description qui va suivre. Cette description se réfère à des dessins annexés sur lesquels :
- la figure 1, déjà décrite, représente un vélocimètre selon l'art antérieur,
- la figure 2, déjà décrite, représente schématiquement un spectre monofréquence,
- la figure 3, déjà décrite, représente les anneaux de diffraction obtenus derrière le dispositif d'analyse,
- la figure 4 illustre le dispositif de l'invention,
- la figure 5 illustre les caractéristiques spectrales du dispositif de l'invention,
- la figure 6 montre une variante avantageuse de l'invention,
- la figure 7 montre deux exemples de traces obtenues respectivement avec un laser à argon et un laser à colorant,
- la figure 8 montre deux courbes donnant le résultat d'un calcul, après dépouillement, de la variation de la vitesse d'une surface avec ces deux types de laser.

Le dispositif représenté sur la figure 4 comprend un moyen d'émission E et un moyen de réception R. Le moyen d'émission comprend une source lumineuse 60, émettant un faisceau lumineux L1 rendu directif par des moyens non représentés (jeu de lentilles), un premier interféromètre FP1, par exemple de type Fabry-Pérot, cet interféromètre délivrant un faisceau L2. Ce faisceau est guidé par une fibre 62 vers une surface S à étudier. Le faisceau L3 réfléchi ou diffusé par S est guidé par une fibre 64 vers le moyen de réception qui comprend un second interféromètre FP2 à l'arrière duquel se trouve un photodétecteur 66, par exemple une caméra à fente.

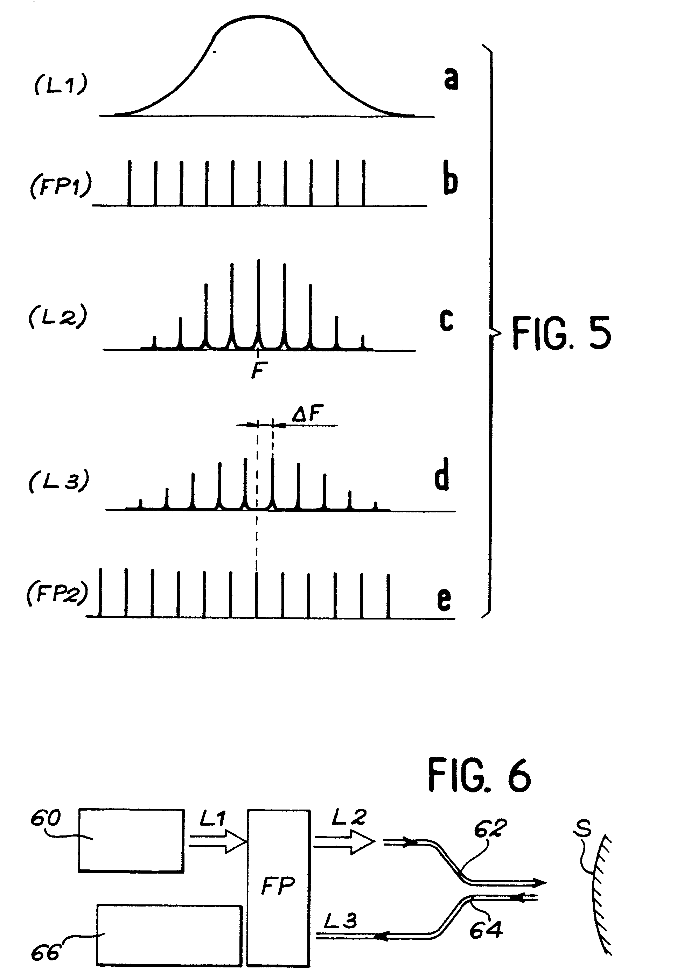

Pour comprendre le fonctionnement d'un tel dispositif, il faut décrire les diverses caractéristiques spectrales des moyens qui le composent. Sur la figure 5, on voit, sur la partie (a), le spectre du faisceau L1 émis par la source 60. Ce spectre est large. Il correspond à la raie ou à la bande d'émission du corps utilisé dans la source. S'il s'agit d'un laser à colorant, cette bande est la bande de fluorescence de la substance colorante (par exemple de la Rhodamine 6G). S'il s'agit d'un laser à argon, la raie est l'une de celles de l'atome d'argon plusieurs fois ionisé.

Sur la partie (b), on voit le peigne de fréquences du premier interféromètre Fabry-Pérot FP1.

La partie (c) représente le spectre du faisceau lumineux L2 issu de l'interféromètre FP1. La bande large est filtrée en un certain nombre de fréquences équidistantes. On ne confondra pas un tel spectre avec le spectre d'un laser multimode bien qu'ils présentent des allures analogues. En effet, dans le cas de l'invention, le spectre obtenu est imposé par un Fabry-Pérot extérieur au laser. Un tel spectre présente donc, de ce fait, une très grande stabilité. Si l'on utilisait le rayonnement émanant d'un laser multimode, la stabilité de ces modes serait très insuffisante et ne permettrait pas d'obtenir une figure d'interférence stable.

La partie (d) représente le spectre du faisceau de retour. Tout d'abord, l'amplitude du rayonnement a été atténuée par la réflexion ou la diffusion, mais surtout les fréquences se trouvent décalées d'une quantité $\Delta F$ fonction de la vitesse de déplacement de la surface S.

Le faisceau ayant ce spectre traverse le second interféromètre Fabry-Pérot FP2, dont le peigne de fréquences est identique à celui du premier interféromètre FP1. A l'arrière de ce second interféromètre se forment des anneaux de diffraction dont le diamètre est analysé comme dans l'art antérieur.

Le moyen le plus simple pour obtenir l'identité de spectre des deux interféromètres est d'utiliser un seul et même dispositif, comme illustré sur la figure 6. On y voit un Fabry-Pérot FP utilisé, dans sa partie supérieure, pour le faisceau à filtrer et, dans sa partie inférieure, pour le faisceau à analyser.

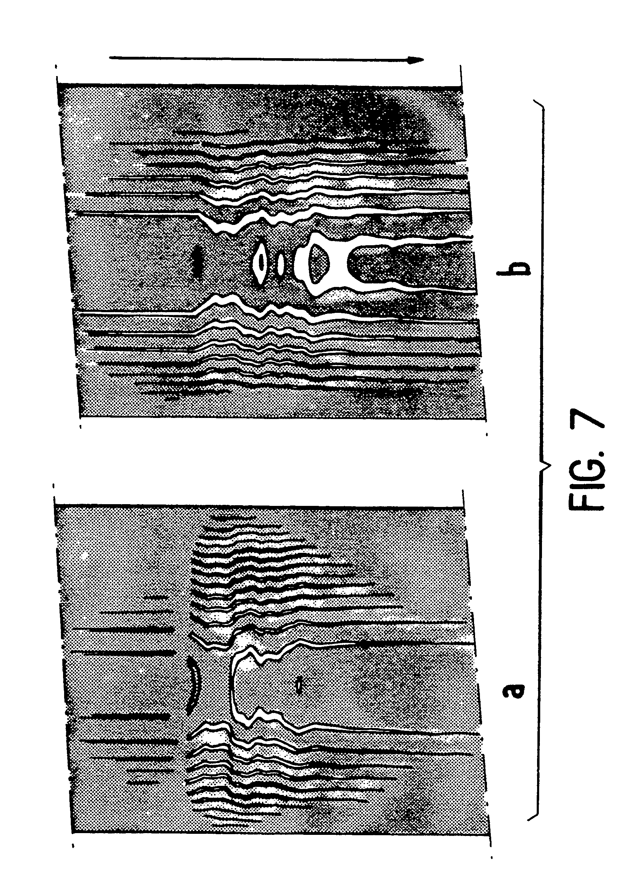

La figure 7 montre les courbes obtenues avec un laser à argon (partie a) et avec un laser à colorant (partie b). Ces courbes présentent des formes classiques qui ont déjà été décrites à propos de la figure 2. La partie supérieure des courbes de la figure 7 correspond à une période statique qui correspond à l'immobilité de la cible. La partie inférieure correspond au mouvement de la cible.

Les résultats de la partie (b) ont été obtenus avec un laser à colorant à Rhodamine 6G pompé par tube éclair. La durée de l'impulsion lumineuse était de 50 µs et la puissance de 10 kW crête. Après filtrage on disposait d'une puissance de 100 W.

Quant au laser à argon, il était de type classique, avec sélecteur de mode et à fonctionnement continu, avec une puissance de 5 W.

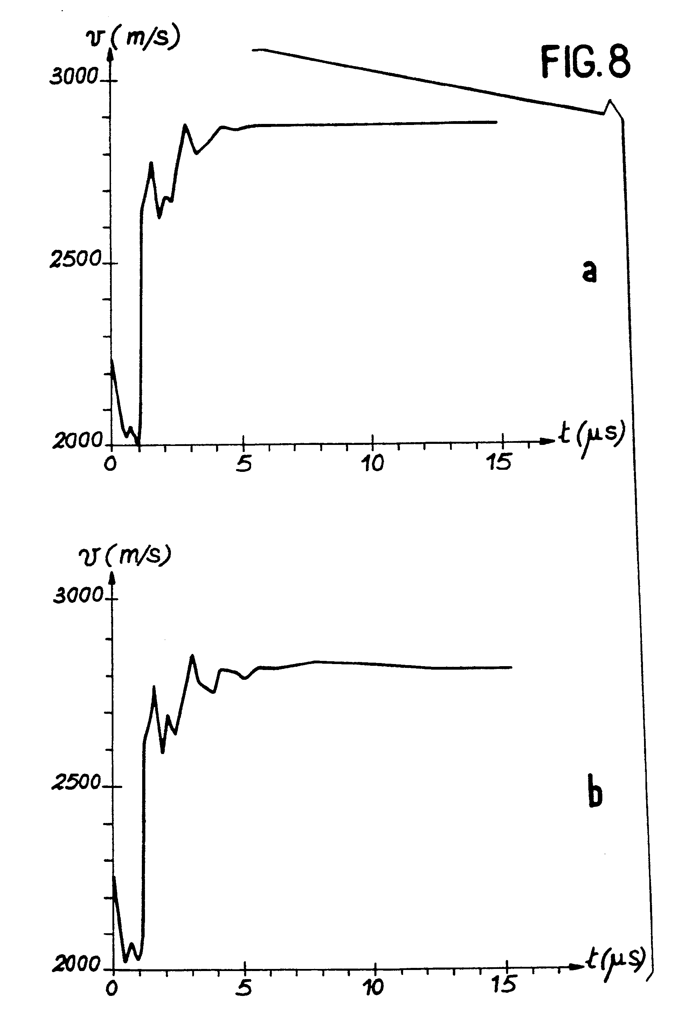

La figure 8 montre le résultat du dépouillement des mesures. En abscisses est porté le temps et en ordonnées la vitesse de la cible. Sur la partie (a), qui correspond à un laser à argon, la vitesse initiale mesurée était de 2230 m/s et la vitesse finale de 2860 m/s. Sur la partie (b), qui correspond à l'utilisation d'un laser à colorant, la vitesse initiale mesurée était de 2250 m/s et la vitesse finale de 2810 m/s.

La précision estimée des mesures est de ± 20 m/s pour une vitesse d'appareil de l'ordre de 1000 m/s (la "vitesse d'appareil" correspond au terme $_c\lambda/4e$ apparaissant dans la formule donnée plus haut : c'est la vitesse pour laquelle l'ordre d'interférence change d'un unité, autrement dit pour laquelle il y a eu défilement d'une frange).

## Revendications

1. Dispositif optique de type interférométrique, pouvant servir notamment à la mesure de la position, du déplacement et/ou de la vitesse d'une surface, ce dispositif comprenant de manière connue :
   - un moyen d'émission constitué par une source lumineuse (60) émettant un faisceau directif de lumière (L1) ayant un spectre de fréquence déterminé, ce faisceau étant dirigé sur la surface à étudier (S),
   - un moyen de réception comprenant un dispositif interférométrique d'analyse (FP2) recevant la lumière venant de la surface à mesurer (s) et un récepteur optique (66) disposé à l'arrière du dispositif interférométrique et apte à mesurer les variations du signal optique,
   ce dispositif optique étant caractérisé par le fait :
   - que la source lumineuse (60) est constituée par une source à spectre large associée à un dispositif interférométrique de filtrage en fréquence (FP1) présentant un peigne de fréquences discrètes,
   - que le dispositif interférométrique de filtrage (FP1) du moyen d'émission et le dispositif interférométrique d'analyse (FP2) du moyen de réception ont le même spectre.

2. Dispositif selon la revendication 1, caractérisé par le fait que le dispositif interférométrique de filtrage (FP1) est un interféromètre Fabry-Pérot.

3. Dispositif selon la revendication 1, caractérisé par le fait que le dispositif interférométrique d'analyse (FP2) est un interféromètre Fabry-Pérot.

4. Dispositif selon la revendication 1, caractérisé par le fait que les dispositifs interférométriques de filtrage (FP1) et d'analyse (FP2) sont tous deux des interféromètres de Fabry-Pérot.

5. Dispositif selon la revendication 4, caractérisé par le fait que les deux interféromètres sont constitués par un seul interféromètre de Fabry-Pérot (FP) utilisé, d'une part, avec le faisceau émis par la source et, d'autre

EP 0 278 813 B1

part, avec le faisceau provenant de la surface étudiée.

6. Dispositif selon la revendication 1, caractérisé par le fait que le photodétecteur (66) est une caméra à fente.

7. Dispositif selon la revendication 1, caractérisé par le fait que la source lumineuse (60) est une source cohérente, par exemple un laser à colorant, à gaz, solide, à semiconducteur.

8. Dispositif selon la revendication 1, caractérisé par le fait que la source lumineuse est une source incohérente, par exemple une diode électroluminescente, une lampe, un arc.

9. Dispositif selon la revendication 1, caractérisé par le fait que la source lumineuse travaille en impulsions.

## Ansprüche

1. Optische Vorrichtung des Interferometertyps, die insbesondere zum Messen der Position, der Bewegung und/oder der Geschwindigkeit einer Oberfläche dienen kann, wobei diese Vorrichtung in bekannter Weise umfaßt :
- eine Emissionsvorrichtung, die aus einer Lichtquelle (60) besteht, die ein gerichtetes Lichtbündel (L1) mit einem bestimmten Frequenzspektrum ausstrahlt, wobei dieses Lichtbündel auf die zu untersuchende Fläche (S) gerichtet ist,
- eine Empfangsvorrichtung mit einer interferometrischen Analysevorrichtung (FP2), die das Licht, das von der zu messenden Oberfläche (s) kommt, empfängt, und einem optischen Empfänger (66), der hinter der interferometrischen Vorrichtung angeordnet ist und geeignet ist, die Variationen des optischen Signals zu messen,
wobei die optische Vorrichtung gekennzeichnet ist durch die Tatsache ;
- daß die Lichtquelle (60) aus einer Lichtquelle mit breiten Spektrum besteht, die mit einer interferometrischen Frequenzfiltervorrichtung (FP1), die einen Kamm mit diskreten Frequenzen aufweist, verbunden ist,
- daß die interferometrische Filtervorrichtung (FP1) der Emissions- vorrichtung und die interferometrische Analysevorrichtung (FP2) der Empfangsvorrichtung dasselbe Spektrum besitzen.

2. Vorrichtung nach Anspruch 1, gekennzeichnet durch die Tatsache, daß die interferometrische Filtervorrichtung (FP1) ein Fabry-Pérot-Interferometer ist.

3. Vorrichtung nach Anspruch 1, gekennzeichnet durch die Tatsache, daß die Interferometrische Analysevorrichtung (FP2) ein Fabry-Pérot-Interferometer ist.

4. Vorrichtung nach Anspruch 1, gekennzeichnet durch die Tatsache, daß die interferometrische Filter- (FP1) und Analysevorrichtung (FP2) zwei Fabry-Pérot-Interferometer sind.

5. Vorrichtung nach Anspruch 4, gekennzeichnet durch die Tatsache, daß die bei den Fabry-Pérot-Interferometer aus einem Fabry-Pérot-Interferometer (FP) bestehen, das auf der einen Seite mit dem von der Lichtquelle ausgesandten Lichtbündel und auf der anderen Seite mit dem von der untersuchten Oberfläche kommenden Lichtbündel verwendet wird.

6. Vorrichtung nach Anspruch 1, gekennzeichnet durch die Tatsache, daß der Photodetektor (66) eine Spaltblendenkamera ist.

7. Vorrichtung nach Anspruch 1, gekennzeichnet durch die Tatsache, daß die Lichtquelle (60) eine kohärente Lichtquelle, zum Beispiel ein Farbstofflaser, ein Gaslaser, ein Festkörperlaser, ein Halbleiterlaser ist.

8. Vorrichtung nach Anspruch 1, gekennzeichnet durch die Tatsache, daß die Lichtquelle (60) eine inkohärente Lichtquelle, zum Beispiel eine Leuchtdiode, eine Lampe, ein Lichtbogen ist.

9. Vorrichtung nach Anspruch 1, gekennzeichnet durch die Tatsache, daß die Lichtquelle im Pulsbetrieb arbeitet.

## Claims

1. Optical device of the interferometric type, which can be used for measuring the position, displacement and/or speed of a surface, said device incorporating in known manner :
an emission means constituted by a lighting source (60) emitting a directional light beam (L1) having a predetermined frequency spectrum, said beam being directed onto the surface (S) to be studied,
a reception means incorporating an interferometric analysis device (FP2) receiving the light from the surface (S) to be measured and an optical receiver (66) positioned to the rear of the interferometric device and able to measure the variations of the optical signal, said optical device being characterized in that :
the lighting source (60) is constituted by a wide spectrum source associated with a frequency filtering interferometric device (FP1) having a discrete frequency range,

5

the interferometric filtering device (FP1) of the emission means and the interferometric analysis device (FP2) of the reception means have the same spectrum.

2. Device according to claim 1, characterized in that the interferometric filtering device (FP1) is a Fabry-Pérot interferometer.

3. Device according to claim 1, characterized in that the interferometric analysis device (FP2) is a Fabry-Pérot interferometer.

4. Device according to claim 1, characterized in that the interferometric filtering (FP1) and analysis (FP2) devices are both Fabry-Pérot interferometers.

5. Device according to claim 4, characterized in that the two interferometers are constituted by a single Fabry-Pérot interferometer (FP) used on the one hand with the beam emitted by the source and on the other with the beam from the studied surface,

6. Device according to claim 1, characterized in that the photodetector (66) is a focal-plane shutter camera.

7. Device according to claim 1, characterized in that the lighting source (60) is a coherent source, e.g. a dye, gas, solid or semiconductor laser.

8. Device according to claim 1, characterized in that the lighting source is an incoherent source, e.g. a light emitting diode, a lamp or an arc.

9. Device according to claim 1, characterized in that the lighting source operates in pulsed manner.

FIG. 1

FIG. 2

EP 0 278 813 B1

FIG. 3

34

32

a

30

D2

b

D1

40

42

44

τ

t

D'1

FIG. 4

E

60

L1

FP1

L2

62

R

66

FP2

L3

64

S

(L1)

a

(FP1)

b

(L2)

c

$F$

(L3)

$\Delta F$

d

(FP2)

e

FIG. 5

FIG. 6

60    L1    FP    L2    62    S

66    L3    64

FIG. 7

FIG.8